# EUROPÄISCHE PATENTSCHRIFT

(11) **EP 3 819 671 B1**
(45) Veröffentlichungstag und Bekanntmachung des Hinweises auf die Patenterteilung: **26.01.2022**
(21) Anmeldenummer: 20202090.5
(22) Anmeldetag: 15.10.2020
(51) Int. Cl.: G01S 17/86, G01S 17/89, G01S 7/42, G01S 7/481, H04N 7/18

(54) **OPTOELEKTRONISCHER SENSOR UND VERFAHREN ZUR ERFASSUNG VON OBJEKTEN**
OPTOELECTRONIC SENSOR AND METHOD FOR DETECTING OBJECTS
CAPTEUR OPTOÉLECTRONIQUE ET PROCÉDÉ DE DÉTECTION DES OBJETS

(30) Priorität: 07.11.2019 DE 102019129986
(43) Veröffentlichungstag der Anmeldung: 12.05.2021
(73) Patentinhaber: SICK AG, 79183 Waldkirch (DE)
(72) Erfinder: Russ, Thomas, 79211 Denzlingen (DE); Tschuch, Sebastian, 79104 Freiburg (DE); Müller, Romain, 79252 Stegen (DE)

(56) Entgegenhaltungen:
- DE-U1-202006 014 939
- DE-U1-202011 052 106
- US-A1- 2010 207 936
- SONG RIHUI ET AL: "Calibration of Event-based Camera and 3D LiDAR", 2018 WRC SYMPOSIUM ON ADVANCED ROBOTICS AND AUTOMATION (WRC SARA), IEEE, 16. August 2018 (2018-08-16), Seiten 289-295, XP033482828, DOI: 10.1109/WRC-SARA.2018.8584215 [gefunden am 2018-12-19]

## Beschreibung

Die Erfindung betrifft einen optoelektronischen Sensor und ein Verfahren zur Erfassung von Objekten in einem Überwachungsbereich mit einem Laserscanner und einer Panoramakamera nach dem Oberbegriff von Anspruch 1 beziehungsweise 11.

In einem Laserscanner tastet ein Abtast- oder Scanstrahl einen Bereich ab und wertet das remittierte oder reflektierte Licht aus. Um auch Informationen über Objektabstände, Konturen oder Profile zu gewinnen, wird meist nicht nur die Anwesenheit von Objekten, sondern zugleich auch deren Entfernung bestimmt. Derartige entfernungsmessende Laserscanner arbeiten nach einem Lichtlaufzeitprinzip, bei dem die Laufzeit vom Scanner in die Szenerie und zurück gemessen wird und anhand der Lichtgeschwindigkeit Entfernungsdaten berechnet werden. Zwei Arten des Lichtlaufzeitverfahrens sind weit verbreitet. Bei phasenbasierten Verfahren moduliert der Lichtsender den Scanstrahl, und es wird die Phase zwischen einer Referenz und dem empfangenen Scanstrahl ermittelt. Pulsbasierte Verfahren prägen dem Scanstrahl ein signifikantes Muster auf, beispielsweise einen schmalen Puls von nur wenigen Nanosekunden Dauer, und bestimmen den Empfangszeitpunkt dieses Musters. In einer als Pulsmittelungsverfahren bezeichneten Verallgemeinerung werden mehrere Pulse oder eine Pulsfolge ausgesandt und die empfangenen Pulse statistisch ausgewertet.

Laserscanner weisen einen Drehspiegel oder ein Polygonspiegelrad auf, um periodisch eine Überwachungsebene oder ein Segment einer Überwachungsebene abzutasten. Alternativ rotiert ein aktiver Messkopf mit Lichtsender und Lichtempfänger. 3D-Laserscanner erfassen einen dreidimensionalen Raumbereich und nicht lediglich eine Fläche. Das kann durch Bewegung um eine weitere Achse realisiert werden, sei es in einer Schwenkoder einer vollständigen Drehbewegung. In der DE 10 2008 032 216 A1 beispielsweise wird die gesamte Scaneinheit samt Sender, Empfänger und Drehspiegel auf einem Ablenkteller angeordnet. Die EP 1 965 225 A2 offenbart verschiedenste Möglichkeiten, die Drehbewegung eines Laserscanners mit einer zusätzlichen Kippbewegung zu kombinieren.

Bekannt sind weiterhin Mehrlagen-Laserscanner, die mehrere in Elevation übereinander angeordnete Abtaststrahlen aufweisen. So ist aus US 8 767 190 B2 bekannt, für mehrere Abtastebenen je einen eigenen Lichtsender und Lichtempfänger vorzusehen, so dass die einzelnen Abtastebenen in gewünschtem Höhen- oder Elevationsraster einjustierbar sind. Die US 2017/0289524 A1 offenbart ein optisches System zum Erfassen von Abstandsinformationen, bei dem sendeseitig eine Reihenanordnung von Lichtquellen und empfangsseitig ein Bildsensor hinter einer großen Empfangslinse mit einem Blendenarray vorgesehen ist.

Kameras stellen eine alternative Möglichkeit dar, um optisch Informationen zu gewinnen. Sie haben üblicherweise gegenüber Laserscannern, die einen Winkel bis zu 360° erfassen, ein deutlich schmaleres Sichtfeld. Durch Einsatz einer Panoramaoptik lässt sich ein breiteres Sichtfeld bis hin zu ebenfalls einer Rundumsicht von 360° erreichen. Die Arbeit von Mäyrä, Aki, Mika Aikio, and Matti Kumpulainen. "Fisheye optics for omnidirectional perception." 2014 IEEE 10th International Conference on Intelligent Computer Communication and Processing (ICCP). IEEE, 2014 verwendet ein Fischaugenobjektiv. Alternativ werden auch katadioptrische Objektive genutzt, etwa in Aikio, Mika, Jukka-Tapani Mäkinen, and Bo Yang. "Omnidirectional camera." 2013 IEEE 9th International Conference on Intelligent Computer Communication and Processing (ICCP). IEEE, 2013 oder in Gimkiewicz, Christiane, et al. "Ultra-miniature catadioptrical system for an omnidirectional camera." Micro-Optics 2008. Vol. 6992. International Society for Optics and Photonics, 2008.

Prinzipiell können derartige Panoramakameras auch selbst Tiefenwerte erzeugen, also als 3D-Kameras ausgebildet sein. Die WO 2012/038601 A1 beispielsweise stellt eine Stereokamera mit omnidirektionalen Objektiven vor. In der DE 20 2006 014 939 U1, der DE 20 2011 052 106 U1 oder der EP 2 354 806 A1 wird jeweils eine Kamera nach dem Lichtlaufzeitprinzip mit omnidirektionalem Objektiv beschrieben.

Keines dieser Systeme vermag rundum befriedigende 3D-Bilddaten zu erzeugen. Die Punktwolken eines Laserscanners weisen typischerweise in vertikaler Richtung eine geringere Auflösung als horizontal. Stereokameras sind zwar in der Lage, kleinere Objekte sowohl horizontal als auch vertikal zu erfassen, besitzen aber prinzipbedingt eine vergleichsweise geringe Tiefenauflösung. Auf Lichtlaufzeit basierende Kameras mit Panoramaoptiken werden zwar auf dem Papier diskutiert, müssen aber in der Praxis ihren Wert erst noch nachweisen.

Deshalb gibt es den Ansatz kombinierter Systeme. Während der Laserscanner genutzt wird, um die Geometrie einer Szene abzutasten, kann die Kamera den visuellen Eindruck der Szene und damit Eigenschaften wie Beleuchtung, Materialen oder Texturen erfassen. Alternativ ist denkbar, mit der Kamera ebenfalls 3D-Daten zu erzeugen, so dass die beiden Systeme einander hinsichtlich der Geometrieerfassung ergänzen.

Dies ist aber mit erheblichem Aufwand für die Kalibrierung und nachgelagerte Datenfusion verbunden. Dazu muss die sogenannte Extrinsik bekannt sein, also die Transformation zwischen dem optischen Zentrum des Laserscanners und der Kamera. Diese Transformation umfasst im Allgemeinen die Translation in drei Raumdimensionen und die drei Drehwinkel im Raum und hat daher sechs Freiheitsgrade. Die Bestimmung der Transformation wird extrinsische Kalibrierung genannt. Man kann dies auch als Bestimmung der Umrechnungsvorschrift zwischen den jeweiligen lokalen Koordinatensystemen beziehungsweise in ein globales Koordinatensystem beschreiben, wofür auch der Begriff Registrierung üblich ist.

In der Arbeit Pandey, Gaurav, et al. "Extrinsic calibration of a 3d laser scanner and an omnidirectional camera." IFAC Proceedings Volumes 43.16 (2010): 336-341 wird ein genau definiertes Schachbrett benutzt, das von verschiedenen Perspektiven gesehen werden muss. Außerdem ist das Kamerasystem mit mehreren optischen Kanälen bestückt.

Nach dem Artikel Park, Yoonsu, et al. "Calibration between color camera and 3D LIDAR instruments with a polygonal planar board." Sensors 14.3 (2014): 5333-5353 wird statt eines Schachbrettes ein genau definiertes rautenförmiges Objekt als Kalibriertarget benutzt. Ein exakt definiertes Kalibrierobjekt kann schwierig oder nur mit hohen Kosten zu beschaffen sein, oder es ist gerade nicht verfügbar, wenn man es beispielsweise während einer Messkampagne braucht. Zudem wird hier von der Kamera nur ein Teilausschnitt des Scanbereichs erfasst.

In Scaramuzza, Davide, Ahad Harati, and Roland Siegwart. "Extrinsic self calibration of a camera and a 3d laser range finder from natural scenes." Intelligent Robots and Systems, 2007. IROS 2007. IEEE/RSJ International Conference on Intelligent Robots and Systems, IEEE, 2007 wird zwar kein Kalibrierobjekt benutzt. Dafür müssen manuell Korrespondenzen definiert werden, die zur Transformationsschätzung benutzt werden, was viel Zeit erfordert und je nach Erfahrung auch fehlerbehaftet ist.

Die DE 10 2017 109 039 A1 befasst sich mit der Fusion einer Kamera und eines Laserscanners. Dabei wird auch mit dem Laserscanner zusätzlich zu dessen 3D-Messpunkten die Remission erfasst, und die gegenseitige Kalibrierung erfolgt durch Vergleich dieses Remissionsbildes mit dem Kamerabild. Aus der GB 2507560 A ist eine extrinsische Kalibrierung eine Kamera und eines Laserscanners bekannt, wobei hier die Aufgabe zusätzlich dadurch erschwert ist, dass sich das System in Bewegung befindet und mit der Kalibration auch die Bewegungsbahnen aus den erfassten Messdaten rekonstruiert wird. In der US 2016/0070981 A1 werden zur Fusionierung einer Kamera und eines Laserscanners auf einem Fahrzeug zunächst Referenzdaten des Laserscanners anhand der Bewegungsbahn lokalisiert, die dann im Kamerabild lokalisiert werden. Die Kamera ist in allen diesen Beispielen keine Panoramakamera.

In der US 2018/0139431 A1 werden Panoramabilder und Tiefendaten erfasst und kombiniert. Die Panoramabilder kommen dabei durch Bewegung der Kamera oder mehrere rundum angeordnete Kameras zustande. Die CN 105678783 B beschreibt ein komplexes Kalibrationsmodell für eine beliebige Anordnung einer Panoramakamera und eines Laserscanners. Durch die zahlreichen Freiheitsgrade ist die Kalibration nur mit großem Aufwand möglich.

Die US 2010/0207936 A1 befasst sich mit der Fusionierung eines 2D-Bildes und einer 3D-Punktewolke. Dafür sind zwei unterschiedliche Sensoren mit voneinander unabhängiger eigener Perspektive eingesetzt.

Die Arbeit von Song, Rihui, et al. "Calibration of Event-based Camera and 3D LiDAR." 2018 WRC Symposium on Advanced Robotics and Automation (WRC SARA), IEEE, 2018 befasst sich mit der Fusion einer ereignisbasierten Kamera mit einem 3D-Lidar sowie der Kalibration eines solchen Systems.

In jüngster Zeit ist eine neuartige Kameratechnik entstanden, die sogenannte ereignisoder eventbasierte Kamera, die in Anlehnung an den visuellen Cortex auch neuromorph genannt wird. Eine herkömmliche Kamera belichtet mit einer regelmäßigen Bildwiederholrate alle ihre Pixel und liest sie dann gleichzeitig aus, um so eine der Bildwiederholrate entsprechende Anzahl stationärer zweidimensionaler Bilder pro betrachtetem Zeitraum zu gewinnen. In einer ereignisbasierten Kamera gibt es ebenfalls eine Matrix von Pixeln, aber weder eine feste Bildwiederholrate noch ein gemeinsames Auslesen von Pixeln. Stattdessen prüft jedes Pixel einzeln, ob es eine Änderung in der Intensität feststellt. Nur in diesem Fall wird eine Bildinformation ausgegeben beziehungsweise ausgelesen, und zwar nur von diesem Pixel. Jedes Pixel ist somit eine Art unabhängiger Bewegungsdetektor. Eine erfasste Bewegung wird individuell als Ereignis gemeldet. Dadurch reagiert die ereignisbasierte Kamera äußerst schnell auf die Dynamik in der Szene. Die Bilddaten sind für das menschliche Auge nicht so intuitiv zu erfassen, weil die statischen Bildanteile fehlen, können aber bei maschinellen Auswertungen Vorteile bieten.

Die Arbeit von Wu, Nanjian. "Neuromorphicvision chips." Science China Information Sciences 61.6 (2018): 060421 gibt hierzu einen Überblick. Eine ereignisbasierte Kamera wird beispielsweise in einem Whitepaper der Firma Prophesee beschrieben, das auf deren Internetseite abgerufen werden kann. Aus der WO 2015/036592 A1, WO 2017/174579 A1 und WO 2018/073379 A1 sind jeweils Pixelschaltkreise für eine ereignisbasierte Kamera bekannt. Die Arbeit von Gallego, Guillermo, Henri Rebecq, und Davide Scaramuzza, "A unifying contrast maximization framework for event cameras, with applications to motion, depth, and optical flow estimation", IEEE Int. Conf. Comput. Vis. Pattern Recog.(CVPR), Vol. 1. 2018 stellt Verfahren vor, wie sich aus den Daten einer ereignisbasierten Kamera Bewegung, Entfernungen und optischer Fluss bestimmen lassen. Die US 2013/0335595 A1 offenbart eine Vorrichtung und ein Verfahren zur ereignisbasierten Bildverarbeitung, konkret zur Bestimmung des optischen Flusses, der im Zusammenhang mit dem Lesen von Codes von keiner besonderen Bedeutung ist.

Ein ereignisbasierter Bildsensor hat seine Vorteile, ersetzt dabei aber lediglich einen herkömmlichen 2D-Bildsensor und trägt damit zunächst in keiner Weise zu einer verbesserten 3D-Erfassung oder gar speziell einer Fusion von Laserscanner und Panoramakamera bei.

Es ist daher Aufgabe der Erfindung, die Kombination eines Laserscanners mit einer Kamera zu vereinfachen.

Diese Aufgabe wird durch einen optoelektronischen Sensor und ein Verfahren zur Erfassung von Objekten in einem Überwachungsbereich mit einem Laserscanner und einer Panoramakamera nach Anspruch 1 beziehungsweise 11 gelöst. Die beiden miteinander kombinierten Systeme Laserscanner und Panoramakamera haben für sich einen beliebigen, an sich bekannten Aufbau. Der Laserscanner sendet einen oder mehrere Abtaststrahlen aus, die durch Drehung einer Ablenkeinheit um eine Drehachse oder möglicherweise auch ein Hin- und Herschwenken um die Drehachse periodisch über eine Abtastebene geführt werden. Die Abtaststrahlen werden wieder empfangen und die Lichtlaufzeit gemessen. Mit diesem Abstand, dem Azimutwinkel aus der Winkelstellung der Ablenkeinheit und dem Elevationswinkel aus der bekannten Abstrahlrichtung des jeweiligen Abtaststrahls ergeben sich 3D-Messpunkte. Die Panoramakamera andererseits umfasst eine Panoramaoptik und einen Bildsensor mit einer Vielzahl von Lichtempfangselementen oder Pixeln. Dank der Panoramaoptik werden Bildpunkte über einen großen Winkelbereich von zumindest 90° oder sogar 180° bis hin zu 360° erreicht. Der Winkelbereich von Laserscanner und Panoramaoptik stimmt vorzugsweise zumindest nahezu überein.

Eine Steuer- und Auswertungseinheit fusioniert die 3D-Messpunkte des Laserscanners und die Bildpunkte der Panoramakamera. Die jeweiligen Messwerte werden also einander zugeordnet beziehungsweise in ein gemeinsames Koordinatensystem umgerechnet, gegebenenfalls mit zusätzlichen Schritten wie Interpolation zum Auffüllen von Lücken oder Glätten in den Ausgangsdaten und/oder den fusionierten Daten. Dadurch werden beispielsweise Tiefenwerte beziehungsweise geometrische Struktur mit Remissionsmesswerten oder der Textur der Szenerie überlagert. Das setzt eine (extrinsische) Kalibration voraus, die Steuer- und Auswertungseinheit muss also entsprechende Transformationen oder Parameter zum Bestimmen der Transformation kennen, sei es durch den festen mechanischen Aufbau, Eingabe entsprechender Parameter oder eine Kalibrationsphase. Die Steuer- und Auswertungseinheit ist je nach Ausführungsform als ein oder mehrere Funktionsblöcke in Laserscanner, Panoramakamera oder einem daran angeschlossenen System implementiert.

Die Erfindung geht von dem Grundgedanken aus, den Laserscanner und die Panoramakamera auf derselben Achse anzuordnen. Der Sensor ist so aufgebaut, dass Drehachse des Laserscanners und optische Achse der Panoramakamera identisch sind, d.h. auf derselben Geraden liegen. Die optische Achse der Panoramakamera ist insbesondere die Symmetrieachse der Panoramaoptik.

Die Erfindung hat den Vorteil, dass durch Fusion von Laserscanner und Kamera mit einem Scan- oder Azimutwinkel von bis zu 360° besonders hochwertige Erfassungsdaten gewonnen werden. Insbesondere die vertikale, aber auch die laterale Auflösung des Laserscanners kann durch die Kamera verfeinert werden. Dadurch wird eine sicherere, schnellere und genauere Objekterkennung und Objektverfolgung als bei schon bekannten technischen Lösungen möglich. Die Kamera hat nur einen optischen Kanal und erfasst damit dennoch das Scanfeld des Laserscanners möglichst vollständig. Durch den besonderen Aufbau auf einer gemeinsamen Achse wird ein vergleichsweise einfaches System erreicht und dabei die Kalibration ganz erheblich vereinfacht. Ein komplexes Kalibrationsmodell ist nicht notwendig.

Die Panoramakamera ist vorzugsweise als Lichtlaufzeitkamera ausgebildet. Dadurch werden auch von der Panoramakamera 3D-Punkte erfasst, zusätzlich oder in Ergänzung zu deren Farb- oder Grauwertbilddaten. Die 3D-Messpunkte des Laserscanners werden auf diese Weise plausibilisiert beziehungsweise es werden insgesamt 3D-Punkte mit höherer Auflösung gewonnen.

Der Bildsensor ist bevorzugt auf der Drehachse angeordnet, insbesondere senkrecht zu der Drehachse orientiert und/oder um die Drehachse zentriert ist. Das ergibt eine rotationssymmetrische Anordnung auch der eigentlichen Erfassung der Bildpunkte, die den Aufbau und die Kalibration weiter vereinfacht. Ein etwaiger Versatz oder eine Schräglage des Bildsensors könnte aber alternativ auch mittels Kalibration ausgeglichen werden.

Die Steuer- und Auswertungseinheit ist bevorzugt dafür ausgebildet, zumindest eine Winkelstellung der Ablenkeinheit Lichtempfangselementen auf einer radialen Linie des Bildsensors zuzuordnen. Dadurch erfolgt eine Zuordnung von Scanwinkel des Laserscanners und Azimutwinkel der Panoramakamera, es findet also eine Einigung auf gemeinsame Winkelkoordinaten bezüglich einer Drehung um die Drehachse statt. Die Winkelstellung ist insbesondere eine Nulllage, es sind aber auch andere beziehungsweise weitere Winkelstellungen denkbar, um die besagte Zuordnung festzulegen und abzusichern. Ursprung oder Bezugspunkt ist vorzugsweise der Durchstoßpunkt der Drehachse durch den Bildsensor, wobei natürlich Translationen der gemeinsamen Weltkoordinaten längs der Drehachse oder in beliebige andere Richtung möglich bleiben.

Zum Verständnis der Zuordnung speziell zu einer radialen Linie auf dem Bildsensor ist zu erläutern, dass die Abtastebenen des Laserscanners jeweils als ein konzentrischer Kreisring um den Durchstoßpunkt der Drehachse durch den Bildsensor abgebildet werden. Jeder von dem Durchstoßpunkt ausgehende Radius wiederum entspricht einem festen Azimutwinkel oder Scanwinkel. Diese Identität von Azimutwinkel und Scanwinkel ist Folge des Aufbaus mit zusammenfallender Drehachse und optischer Achse. Es ist also lediglich noch eine Nulllage oder ein Winkel 0° zu kalibrieren, wobei dies natürlich nur Namen für einen gemeinsamen Referenzwinkel sind. Die Nulllage wiederum ist durch den geometrischen Aufbau festgelegt, so dass bei fester, justierter Anordnung des Bildsensors und einem Winkel 0° des Laserscanners eine eigentliche Kalibration entfallen kann, da sie durch den Zusammenbau erfolgt. Die Nulllage kann aber auch Werk kalibriert werden, oder sie wird eingelernt, indem der Laserscanner in seiner Nulllage verharrt und die Steuer- und Auswertungseinheit die beleuchteten Pixel auf dem Bildsensor lokalisiert und sich den entsprechenden Radius als Nulllage des Azimutwinkels merkt.

Die Steuer- und Auswertungseinheit ist bevorzugt dafür ausgebildet, Lichtempfangselemente in einem radialen Abstand zu der optischen Achse einem Abtaststrahl zuzuordnen. Dies ist aufgrund des besonderen Aufbaus des Sensors der einzige neben Azimutwinkel und Scanwinkel noch zu kalibrierende Freiheitsgrad, bei dem ein jeweiliger Abtaststrahl bei einem bestimmten Objektabstand entsprechend seinem Azimutwinkel einem bestimmten der konzentrischen Kreise, also einem radialen Abstand zum Durchstoßpunkt zugeordnet wird. Erneut ist das alles durch die Geometrie festgelegt, in diesem Fall vor allem durch die Parallaxe, die wiederum von dem gegenseitigen Abstand von Laserscanner und Panoramakamera auf der Drehachse abhängt. Alternativ zu einer Berechnung der Kalibration und einer justierten Montage ist ein Kalibrationsverfahren ab Werk oder vor Ort denkbar. Dazu werden bestimmte Abtaststrahlen des Laserscanners aktiviert und die auf dem Bildsensor abgebildeten konzentrischen Kreisringe bei konstantem Objektabstand lokalisiert. Deren diskrete Reihenfolge in radialer Richtung entspricht eineindeutig derjenigen der Übereinanderanordnung der Abtaststrahlen in Elevation.

Laserscanner und Panoramakamera sind bevorzugt auf der Drehachse direkt übereinander angeordnet. Der Abstand zwischen beiden Systemen wird so gering wie möglich gehalten, um eine geringe Parallaxe und möglichst gut zueinander passende 3D-Messpunkte und Bildpunkte zu erhalten. Eine Abstandskorrektur der Bildpunkte kann anhand der jeweiligen Abstandsinformation des Scanpunktes, des Abstands zwischen Laserscanner und Panoramakamera und der bekannten Abbildungseigenschaften der Panoramaoptik in radialer Richtung auf eindeutige Weise erfolgen. Vorteilhaft ist es an dieser Stelle, die Panoramaoptik so zu designen, dass die radiale Position auf dem Bildensor möglichst proportional zum Elevationswinkel ist, auch um eine möglichst gleichbleibende Auflösung über den gesamten Scanbereich zu ermöglichen.

Die Steuer- und Auswertungseinheit ist bevorzugt dafür ausgebildet, einen von dem Abtaststrahl auf dem Bildsensor erzeugten Lichtfleck zu erkennen und anhand dessen 3D-Messpunkte und Bildpunkte einander zuzuordnen. Das ermöglicht sogar eine dynamische Kalibration oder Nachführung der Kalibration im Betrieb, insbesondere um auch den zeitlichen Zusammenhang der jeweiligen Messdaten in besonders genaue Übereinstimmung zu bringen.

Der Bildsensor ist bevorzugt ein ereignisbasierter Bildsensor. Derartige ereignisbasierte (event-based) oder neuromorphe Bildsensoren wurden einleitend kurz vorgestellt. Sie sind besonders gut geeignete, bewegte oder sich schnell ändernde Szenerien zu überwachen, wie im Falle mobiler Anwendungen des Sensors.

Dabei sind die Lichtempfangselemente bevorzugt dafür ausgebildet festzustellen, wenn sich die von dem jeweiligen Lichtempfangselement erfasste Intensität ändert, und genau dann ereignisbasiert eine Bildinformation zu liefern. Das Lichtempfangselement prüft, ob sich die erfasste Intensität verändert. Nur das ist ein Ereignis, und nur bei einem Ereignis wird eine Bildinformation ausgegeben oder ausgelesen. Es ist eine Art Hysterese denkbar, bei der das Lichtempfangselement eine definierte, zu geringfügige Änderung der Intensität noch ignoriert und nicht als Ereignis auffasst.

Das jeweilige Lichtempfangselement liefert vorzugsweise als Bildinformation eine differentielle Information, ob sich die Intensität verringert oder erhöht hat. Die aus dem Lichtempfangselement gelesene Information ist also beispielsweise ein Vorzeichen +1 oder -1 je nach Änderungsrichtung der Intensität. Dabei kann eine Schwelle für Intensitätsänderungen gesetzt sein, bis zu denen das Lichtempfangselement noch kein Ereignis auslöst. In einer nachgelagerten internen Repräsentation zur weiteren Auswertung kann für Zeiten, zu denen kein Ereignis erfasst wurde, der Wert 0 ergänzt werden.

Das jeweilige Lichtempfangselement liefert bevorzugt als Bildinformation eine integrierte Intensität in einem durch eine Änderung der Intensität bestimmten Zeitfenster. Hier beschränkt sich die Information nicht auf eine Richtung der Intensitätsänderung, sondern es wird in einem durch das Ereignis festgelegten Zeitfenster das einfallende Licht integriert und dadurch ein Grauwert bestimmt. Der Messwert entspricht damit demjenigen einer herkömmlichen Kamera, aber der Zeitpunkt der Erfassung bleibt ereignisbasiert und an eine Intensitätsänderung gekoppelt.

Das jeweilige Lichtempfangselement gibt Bildinformationen vorzugsweise mit einer Aktualisierungsfrequenz von mindestens einem KHz oder sogar mindestens zehn KHz aus. Die Aktualisierungsfrequenz einer herkömmlichen Kamera ist die Bildwiederholfrequenz oder Framerate. Eine solche gemeinsame Bildwiederholfrequenz kennt eine ereignisbasierte Kamera nicht, da die Lichtempfangselement ihre Bildinformationen einzeln und ereignisbasiert ausgeben oder auffrischen. Dabei gibt es aber extrem kurze Ansprechzeiten, die mit einer herkömmlichen Kamera nur zu immensen Kosten mit tausend oder mehr Bildern pro Sekunde erreichbar wären, bei einer ereignisbasierten immer noch möglichen Aktualisierungsfrequenz von zehn KHz oder sogar mehreren zehn KHz wäre das mit herkömmlichen Kameras technisch nicht mehr darstellbar. Diese hohe zeitliche Auflösung hat auch den Vorteil, dass es praktisch keine Bewegungsartefakte (motion blurr) gibt. Innerhalb einer der extrem kurzen Aktualisierungsperioden, die einer herkömmlichen Belichtungszeit entspricht, bewegt sich ein Objekt nicht mehrere Pixel weiter, und deshalb wird auch kein verschmiertes Bild aufgenommen. Vorzugsweise wird die extrem schnelle Aufnahme dafür genutzt, den Laserspot zeitlich hochaufgelöst zu erfassen und so eine hochgenaue Kalibration zu erreichen oder nachzuführen.

Laserscanner und/oder Panoramakamera sind vorzugsweise als Module ausgebildet, die aus dem Sensor entfernt oder dem Sensor hinzugefügt werden können, wobei insbesondere die Steuer- und Auswertungseinheit dafür ausgebildet ist, Laserscanner und Panoramakamera bei nachträglichem Hinzufügen eines Moduls zueinander zu kalibrieren. Durch den modularen Aufbau kann eine Panoramakamera oder ein Laserscanner nachträglich auch noch bei Bedarf am Betriebsort ergänzt werden. Die Kalibration erfolgt dann beispielsweise durch Auslösen eines Einlernvorgangs. Das ist wegen des Aufbaus auf einer gemeinsamen Achse leicht möglich. Ein herkömmliches allgemeines Kalibrationsmodell dagegen würde Kalibrationsobjekte in der Szenerie und eine sehr komplexe Berechnung mit entsprechend vielen Kalibrationsdaten erfodern.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Fusionierung ordnet dabei vorzugsweise einen Scanwinkel der Abtasteinheit einem Azimutwinkel auf dem Bildsensor und einen Elevationswinkel des Abtaststrahls einem radialen Abstand zu der Drehachse auf dem Bildsensor zu. Die dieser einfachen Kalibrierung und Umrechnung zugrundeliegende Abbildung von Abtastebenen des Laserscanners auf konzentrische Kreisringe um die Drehachse auf dem Bildsensor wurde oben erläutert: Radien entsprechen jeweils zugleich einem festen Azimut- und Scanwinkel, und der radiale Abstand der jeweiligen Kreisringe ist eineindeutig einem bestimmten Abtaststrahl bei einem bestimmten Objektabstand zugeordnet.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines Laserscanners;
- Fig. 2: eine schematische Schnittdarstellung einer Panoramakamera;
- Fig. 3: eine schematische Schnittdarstellung eines optoelektronischen Sensors als Kombination eines Laserscanners und einer Panoramakamera; und
- Fig. 4: eine Darstellung des Sichtfeldes des Sensors gemäß Figur 3 sowie die Abbildung des Sichtfeldes auf dem Bildsensor der Panoramakamera.

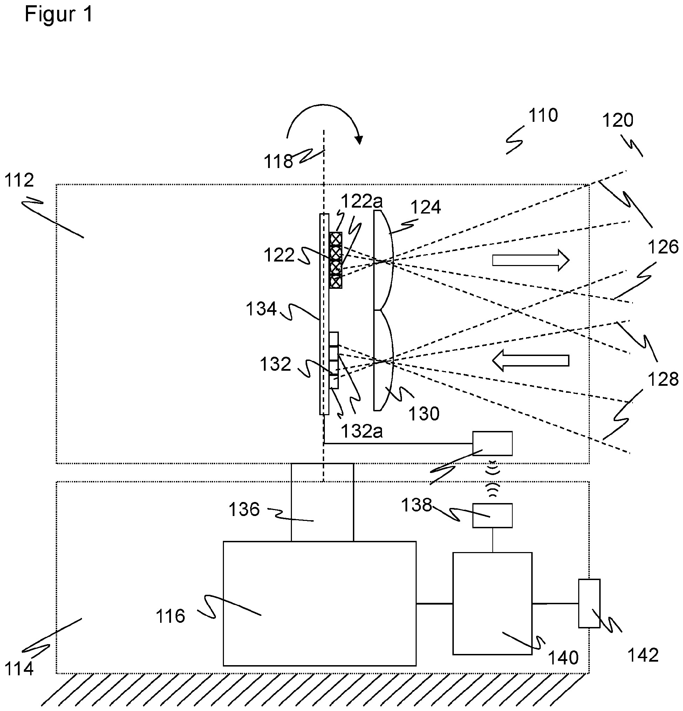

Figur 1 zeigt eine schematische Schnittdarstellung durch einen beispielhaften Laserscanner 110. Der Laserscanner 110 umfasst in grober Aufteilung eine bewegliche Abtasteinheit 112 und eine Sockeleinheit 114. Die Abtasteinheit 112 ist der optische Messkopf, während in der Sockeleinheit 114 weitere Elemente wie eine Versorgung, Auswertungselektronik, Anschlüsse und dergleichen untergebracht sind. Im Betrieb wird mit Hilfe eines Antriebs 116 der Sockeleinheit 114 die Abtasteinheit 112 in eine Drehbewegung um eine Drehachse 118 versetzt, um so einen Überwachungsbereich 120 periodisch abzutasten.

In der Abtasteinheit 112 erzeugt ein Lichtsender 122 mit mehreren Lichtquellen 122a, beispielsweise LEDs oder Laser in Form von Kantenemittern oder VCSELs, mit Hilfe einer gemeinsamen Sendeoptik 124 mehrere Sendelichtstrahlen 126 mit gegenseitigem Winkelversatz, die in den Überwachungsbereich 120 ausgesandt werden. Die mehreren Sendelichtstrahlen 126 können alternativ über weniger oder nur eine Lichtquelle und mindestens ein Strahlteiler- oder Mustererzeugungselement entstehen. Die Anzahl von vier Sendelichtstrahlen 126 ist nur ein Beispiel, es können mehr oder weniger, auch nur ein einziger Sendelichtstrahl sein.

Treffen die Sendelichtstrahlen 126 in dem Überwachungsbereich 120 auf ein Objekt, so kehren entsprechende remittierte Lichtstrahlen 128 zu dem Laserscanner 110 zurück. Die remittierten Lichtstrahlen 128 werden von einer Empfangsoptik 130 auf einen Lichtempfänger 132 mit mehreren Lichtempfangselementen 132a geführt, die jeweils ein elektrisches Empfangssignal erzeugen. Die Lichtempfangselemente 132a können separate Bauteile oder Pixel einer integrierten Matrixanordnung sein, beispielsweise Photodioden, APDs (Avalanche Diode) oder SPADs (Single-Photon Avalanche Diode).

Lichtsender 122 und Lichtempfänger 132 sind in der in Figur 1 gezeigten Ausführungsform gemeinsam auf einer Leiterkarte 134 angeordnet, die auf der Drehachse 118 liegt und mit der Welle 136 des Antriebs 116 verbunden ist. Dies ist nur beispielhaft zu verstehen, es sind praktisch beliebige Anzahlen und Anordnungen von Leiterkarten denkbar. Auch der optische Grundaufbau mit biaxial nebeneinanderliegendem Lichtsender 122 und Lichtempfänger 132 ist nicht zwingend und durch jede an sich von einstrahligen optoelektronischen Sensoren oder Laserscannern bekannte Bauform ersetzbar. Ein Beispiel dafür ist eine koaxiale Anordnung mit oder ohne Strahlteiler.

Eine berührungslose Versorgungs- und Datenschnittstelle 138 verbindet die bewegliche Abtasteinheit 112 mit der ruhenden Sockeleinheit 114. Dort befindet sich eine Abstandsmesseinheit 140, die zumindest teilweise auch auf der Leiterkarte 134 oder an anderem Ort in der Abtasteinheit 112 untergebracht sein kann. Die Abstandsmesseinheit 140 steuert den Lichtsender 122 und erhält die Empfangssignale des Lichtempfängers 132 zur weiteren Auswertung. Sie steuert außerdem den Antrieb 116 und erhält das Signal einer nicht gezeigten, von Laserscannern allgemein bekannten Winkelmesseinheit, welche die jeweilige Winkelstellung der Abtasteinheit 112 bestimmt.

Zur Auswertung wird vorzugsweise mit einem an sich bekannten Lichtlaufzeitverfahren die Distanz zu einem angetasteten Objekt gemessen. Zusammen mit der Information über die Winkelstellung von der Winkelmesseinheit stehen nach jeder Scanperiode mit Winkel und Entfernung zweidimensionale Polarkoordinaten aller Objektpunkte in einer Abtastebene zur Verfügung. Die jeweilige Abtastebene ist über die Identität des jeweiligen remittierten Lichtstrahls 128 und dessen Erfassung in einem der Lichtempfangselemente 132a ebenfalls bekannt, so dass insgesamt ein dreidimensionaler Raumbereich abgetastet wird. Damit sind die Objektpositionen beziehungsweise Objektkonturen bekannt und können über eine Sensorschnittstelle 142 ausgegeben werden, beispielsweise als 3D-Punktwolke. Die Sensorschnittstelle 142 oder ein weiterer, nicht gezeigter Anschluss dienen umgekehrt als Parametrierschnittstelle.

Der dargestellte Laserscanner 110 hat einen rotierendem Messkopf, nämlich die Abtasteinheit 112. Dabei kann nicht nur ein Sende-Empfangsmodul mitrotieren wie hier dargestellt, es sind weitere derartige Module mit Höhenversatz oder einem Winkelversatz bezüglich der Drehachse 118 vorstellbar. Alternativ ist auch eine periodische Ablenkung mittels Drehspiegel oder einem Facettenspiegelrad denkbar. Das erfordert zusätzliche Überlegungen, weil es von der jeweiligen Drehstellung abhängt, wie die mehreren Sendelichtstrahlen 126 in den Überwachungsbereich 20 fallen. Sie rotieren gleichsam mit der Bewegung des Drehspiegels umeinander, dies aber in einer vorhersagbaren und daher in den 3D-Messpunkten kompensierbaren Weise.

Während der Rotation des Laserscanners 110 wird durch jeden der Sendelichtstrahlen 126 jeweils eine Fläche abgetastet. Nur bei einem Ablenkwinkel von 0°, also einem in Figur 1 nicht vorhandenen horizontalen Sendelichtstrahl, wird dabei eine Ebene des Überwachungsbereichs 120 abgetastet. Die übrigen Sendelichtstrahlen tasten die Mantelfläche eines Kegels ab, der je nach Ablenkwinkel unterschiedlich spitz ausgebildet ist. Bei mehreren Sendelichtstrahlen 126, die in unterschiedlichen Winkeln nach oben und unten abgelenkt werden, entsteht insgesamt als Abtastgebilde eine Art Schachtelung von mehreren Sanduhren. Auch diese Kegelmantelflächen werden hier manchmal vereinfachend als Abtastebenen bezeichnet.

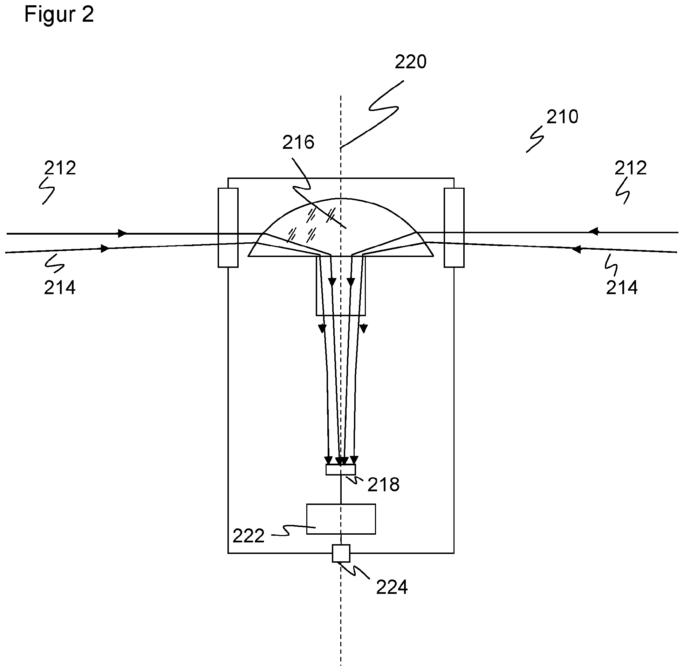

Figur 2 zeigt eine Schnittdarstellung einer beispielhaften Panoramakamera 210. Aus deren Überwachungsbereich 212 wird Empfangslicht 214 über eine Panoramaoptik 216 auf einen Bildsensor 218 geführt. Die Panoramaoptik ist in der Lage, Licht über einen großen Azimutwinkelbereich von bis zu 360° aufzunehmen. Sie ist beispielsweise als Fischauge oder katadioptrische beziehungsweise omnidirektionale Optik ausgebildet. Einleitend wurden einige konkrete Umsetzungsmöglichkeiten zitiert.

Der Bildsensor 218 steht vorzugsweise senkrecht zur Symmetrieachse 220 der Panoramakamera 210 beziehungsweise der Panoramaoptik 216, und nochmals vorzugsweise so, dass der Durchstoßpunkt der Symmetrieachse 220 im Zentrum des Bildsensors 218 liegt. Neben Ausführungsformen als CCD- oder CMOS-Matrix mit Pixeln für Farb- oder Monochromaufnahmen sind auch Ausführungsformen als ein einleitend erwähnter ereignisbasierter oder neuromorpher Bildsensor möglich. Wegen dessen extrem schneller Erfassung von bis zu 50 KHz und mehr eignet sich ein solcher ereignisbasierter Bildsensor besonders für ein schnelles und kontinuierliches Objekttracking. Das ergänzt besonders vorteilhaft die vergleichsweise langsame Widerholrate eines Laserscanners 110 mit typischen Umlauffrequenzen von 50 Hz im Sinne zeitlicher Diversität. In dem noch zu beschreibenden Kombinationssystem aus Laserscanner 110 und Panoramakamera 210 können die Spots der sich bewegenden Sendelichtstrahlen 126 zeitlich hochaufgelöst aufgenommen werden, so dass eine zeitliche Zuordnung der Messpunkte der beiden Systeme 110, 210 mit der hohen zeitlichen Auflösung des ereignisbasierten Bildsensors möglich wird.

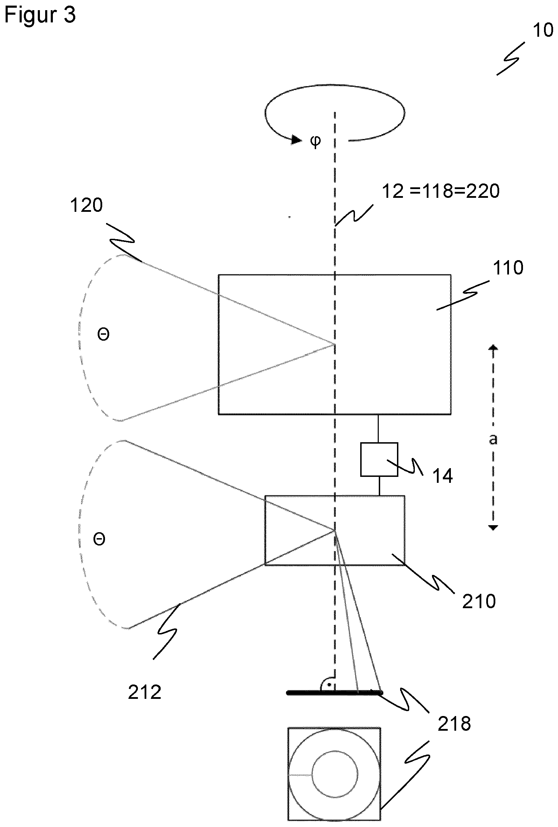

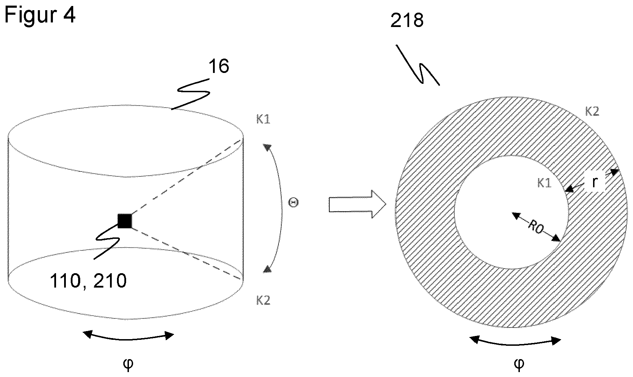

Die Position eines jeweiligen Pixels des Bildsensors 218 trägt eine Positionsinformation des jeweils erfassten Objektpunkts in sich, nämlich in Winkelrichtung um den Durchstoßpunkt der Symmetrieachse 220 den Azimutwinkel und in radialer Richtung den Elevationswinkel. Das wird später unter Bezugnahme auf die Figuren 3 und 4 noch genauer erläutert.

Eine Bildausleseeinheit 222 ist mit dem Bildsensor 218 verbunden und gibt über einen Ausgang 224 die erfassten Bildpunkte aus. In einer alternativen Ausführungsform weist die Panoramakamera eine zusätzliche Beleuchtung auf, die beispielsweise koaxial mit Hilfe eines Teilerspiegels in den Strahlengang der Panoramaoptik 216 eingekoppelt wird oder die eine eigene Panoramaoptik aufweist. Damit kann dann die Bildausleseeinheit 222 erweitert werden und durch entsprechend modulierte Beleuchtung auch eine Lichtlaufzeit messen. Eine solche 3D-Panoramakamera wird in der Praxis oft die Lichtlaufzeitmessung oder zumindest eine vorbereitende Demodulation bereits in den Pixeln des Bildsensors 218 durchführen, so dass dann die Trennung in zwei separate Bauteile 218, 222 wie in Figur 2 zumindest teilweise aufgehoben ist. Mit einer 3D-Panoramakamera werden für die sogleich zu beschreibende Fusion 3D-Bildpunkte in Ergänzung zu oder anstelle von Farb- oder Grauwertbildpunkten erzeugt.

Figur 3 zeigt eine schematische Schnittdarstellung eines optoelektronischen Sensors 10 als Kombination eines Laserscanners 110 und einer Panoramakamera 210. Die beiden einzelnen Systeme Laserscanner 110 und Panoramakamera 210 können in sich in einer der beschriebenen oder einer sonstigen an sich bekannten Weise ausgestaltet sein. Sie sind ab nun nur noch rein symbolisch als Funktionsblöcke dargestellt. Eine Fusion und Weiterverarbeitung der jeweiligen Messdaten kann praktisch beliebig über eine Abstandsmesseinheit 140 des Laserscanners 110, eine Bildausleseeinheit 222 der Panoramaoptik, eine gemeinsame Datenverarbeitungseinheit 14 und/oder ein angeschlossenes weiteres System wie eine übergeordnete Steuerung oder auch eine Cloud verteilt erfolgen.

Laserscanner 110 und Panoramakamera 210 sind derart in den gemeinsam gebildeten Sensor 10 integriert, dass die Drehachse 118 des Laserscanners 110 und die Symmetrieachse 220 in einer gemeinsamen Achse 12 zusammenfallen. Die mechanische Kopplung ist also derart, dass Drehachse 118 und Symmetrieachse 220 identisch sind beziehungsweise der Bildsensor 218 senkrecht auf der Drehachse 118 des Laserscanners 110 steht. Die extrinsische Kalibrierung und somit auch die Zuordnung zwischen den 3D-Messpunkten des Laserscanners 110 und den Bildpunkten der Panoramakamera 210 wird dadurch ganz erheblich vereinfacht.

Das liegt zunächst daran, dass durch Verwendung einer Panoramakamera 210 insgesamt nur zwei Systeme kalibriert werden müssen. Durch den speziellen Aufbau des Sensors 10 sind weiterhin sowohl der Scanwinkel der Drehbewegung des Laserscanners 110 als auch der Azimutwinkel der Panoramakamera durch den gemeinsamen Winkel ϕ beschrieben. Es fehlt hier lediglich noch an einer Einigung über die Nulllage. Die jeweiligen Höhen- oder Elevationswinkel Θ lassen sich ebenfalls einfach einem radialen Abstand zuordnen. Das ist unten in Figur 3 in einer Draufsicht auf den Bildsensor 218 skizziert.

Diese Skizze wird recht in Figur 4 nochmals vergrößert gezeigt. Links ist dort nochmals der Sensor 10 mit seinem gemeinsamen Überwachungsbereich 16 gezeigt, wobei sich in diesem gemeinsamen Überwachungsbereich 16 die jeweiligen Überwachungsbereiche 120, 212, die in Figur 3 bei großem Darstellungsmaßstab sehr nahe am System getrennt erscheinen, vorzugsweise möglichst vollständig überlappen. Das wird unterstützt, wenn der gegenseitige Abstand a auf der gemeinsamen Achse 12 möglichst gering gewählt wird. In Azimutrichtung ϕ wird jeweils ein großer Winkelbereich von mindestens 90°, mindestens 180° oder sogar 360° beziehungsweise einem passenden Zwischenwert wie 270° erfasst.

Rechts in Figur 4 ist zu sehen, wie der gemeinsame Überwachungsbereich 16 auf dem Bildsensor 218 auf einen Kreisring abgebildet wird. Der innere Begrenzungskreis mit Radius K1 entspricht einem obersten Elevationswinkel, der äußere Begrenzungskreis mit Radius K2 einem untersten Elevationswinkel. Objektpunkte bei festem Winkel ϕ werden auf einen Strecke r längs des Radius abgebildet. Wo das ist, hängt wesentlich von der Parallaxe ab, so dass es sich empfiehlt, den Abstand a möglichst klein zu halten. Entsprechend zeichnen die Abtaststrahlen 126, 128 während ihrer Abtastbewegung einen Kreis mit Radius zwischen K1 und K2 entsprechend ihrer jeweiligen Elevation Θ, und übereinanderliegende Abtaststrahlen 126, 128 bei festem Scanwinkel eine Strecke längs eines Radius' r.

Die Kalibration kann sich deshalb darauf beschränken, dass Scanwinkel und Azimutwinkel abgeglichen werden, beispielsweise mit einer gemeinsamen Nulllage, und die Punkte längs der Strecke r den jeweiligen Abtaststrahlen 126, 128 zugeordnet werden. Diese Beziehungen sind durch die Geometrie in dem Sensor 10 vorgegeben und können daher berechnet werden. Alternativ werden Spots der Abtaststrahlen 126, 128 bei stillstehender Ablenkeinheit 112 und/oder Kreisringe während der periodischen Abtastbewegung auf dem Bildsensor 218 lokalisiert. Insbesondere bei Verwendung eines ereignisbasierten Bildsensors 218 ist das sogar dynamisch im Betrieb möglich. Ein komplexes Kalibrationsmodell ist nicht länger notwendig.

## Patentansprüche

1. Optoelektronischer Sensor (10) zur Erfassung von Objekten in einem Überwachungsbereich (16, 120, 212), wobei der Sensor (10)
einen Laserscanner (110) mit einer um eine Drehachse (118) drehbaren Ablenkeinheit (112), mit einem Lichtsender (122) und einem Lichtempfänger (132) zur Abtastung des Überwachungsbereichs (120) mit mindestens einem Abtaststrahl (126, 128) sowie mit einer ersten Abstandsmesseinheit (140), die dafür ausgebildet ist, aus Empfangssignalen des Lichtempfängers (132) 3D-Messpunkte der jeweiligen von dem Abtaststrahl (126, 128) getroffenen Objekte mit einem Lichtlaufzeitverfahren zu bestimmen,
eine Panoramakamera (210) mit einer Panoramaoptik (216) und einem Bildsensor (218) mit einer Vielzahl von Lichtempfangselementen zur Erfassung von Bildpunkten
sowie eine Steuer- und Auswertungseinheit (14, 140, 222) aufweist, die dafür ausgebildet ist, die 3D-Messpunkte des Laserscanners (110) und die Bildpunkte der Panoramakamera (210) zu fusionieren,
wobei Laserscanner (110) und Panoramakamera (210) in einem Abstand (a) zueinander angeordnet sind, und wobei
dassdie optische Achse (220) der Panoramakamera und die Drehachse (118) zusammenfallen (12).

2. Sensor (10) nach Anspruch 1,
wobei die Panoramakamera (210) als Lichtlaufzeitkamera ausgebildet ist.

3. Sensor (10) nach Anspruch 1 oder 2,
wobei der Bildsensor (218) auf der Drehachse (12, 118) angeordnet ist, insbesondere senkrecht zu der Drehachse (12, 118) orientiert und/oder um die Drehachse (12, 118) zentriert ist.

4. Sensor (10) nach einem der vorhergehenden Ansprüche,
wobei die Steuer- und Auswertungseinheit (14, 140, 222) dafür ausgebildet ist, zumindest eine Winkelstellung der Ablenkeinheit (112) Lichtempfangselementen auf einer radialen Linie des Bildsensors (218) zuzuordnen.

5. Sensor (10) nach einem der vorhergehenden Ansprüche,
wobei die Steuer- und Auswertungseinheit (14, 140, 222) dafür ausgebildet ist, Lichtempfangselemente in einem radialen Abstand zu der optischen Achse einem Abtaststrahl (126, 128) zuzuordnen.

6. Sensor (10) nach einem der vorhergehenden Ansprüche,
wobei Laserscanner (110) und Panoramakamera (210) auf der Drehachse (12, 118) direkt übereinander angeordnet sind.

7. Sensor (10) nach einem der vorhergehenden Ansprüche,
wobei die Steuer- und Auswertungseinheit (14, 140, 222) dafür ausgebildet ist, einen von einem Abtaststrahl (126, 128) auf dem Bildsensor (128) erzeugten Lichtfleck zu erkennen und anhand dessen 3D-Messpunkte und Bildpunkte einander zuzuordnen.

8. Sensor (10) nach einem der vorhergehenden Ansprüche,
wobei der Bildsensor (218) ein ereignisbasierter Bildsensor ist.

9. Sensor (10) nach Anspruch 8,
wobei die Lichtempfangselemente dafür ausgebildet sind festzustellen, wenn sich die von dem jeweiligen Lichtempfangselement erfasste Intensität ändert, und genau dann ereignisbasiert eine Bildinformation zu liefern, wobei insbesondere ein jeweiliges Lichtempfangselement als Bildinformation eine differentielle Information liefert, ob sich die Intensität verringert oder erhöht hat, und/oder eine integrierte Intensität in einem durch eine Änderung der Intensität bestimmten Zeitfenster liefert.

10. Sensor (10) nach einem der vorhergehenden Ansprüche,
wobei Laserscanner (110) und/oder Panoramakamera (210) als Module ausgebildet sind, die aus dem Sensor (10) entfernt oder dem Sensor (10) hinzugefügt werden können, und wobei insbesondere die Steuer- und Auswertungseinheit (14, 140, 222) dafür ausgebildet ist, Laserscanner (110) und Panoramakamera (210) bei nachträglichem Hinzufügen eines Moduls zueinander zu kalibrieren.

11. Verfahren zur Erfassung von Objekten in einem Überwachungsbereich (16, 120, 212), wobei der Überwachungsbereich (120)
einerseits von einem Laserscanner (110) mit einer um eine Drehachse (118) drehbaren Ablenkeinheit (112), einem Lichtsender (122) und einem Lichtempfänger (132) mit mindestens einem Abtaststrahl (126, 128) abgetastet wird, um aus Empfangssignalen des Lichtempfängers (132) 3D-Messpunkte der jeweiligen von dem Abtaststrahl (126, 128) getroffenen Objekte mit einem Lichtlaufzeitverfahren zu bestimmen,
und andererseits von einer Panoramakamera (210) mit einer Panoramaoptik (216) und einem Bildsensor (218) mit einer Vielzahl von Lichtempfangselementen erfasst wird, um Bildpunkte zu gewinnen, und wobei die 3D-Messpunkte des Laserscanner (110) und die Bildpunkte der Panoramakamera (210) fusioniert werden,
wobei Laserscanner (110) und Panoramakamera (210) in einem Abstand (a) zueinander angeordnet sind, und wobei
die optische Achse (220) der Panoramakamera (210) und die Drehachse (118) zusammenfallen (12).

12. Verfahren nach Anspruch 11,
wobei die Fusionierung einen Scanwinkel der Abtasteinheit (112) einem Azimutwinkel auf dem Bildsensor (218) und einen Elevationswinkel des Abtaststrahls (126, 128) einem radialen Abstand zu der Drehachse (12, 118) auf dem Bildsensor (218) zuordnet.

## Claims

1. An optoelectronic sensor (10) for detecting objects in a monitoring area (16, 120, 212), the sensor (10) comprising
a laser scanner (110) having a deflection unit (112) that is rotatable about an axis of rotation (118), having a light transmitter (122) and a light receiver (132) for scanning the monitoring area (120) using at least one scanning beam (126, 128) and having a first distance measurement unit (140) which is configured to determine 3D measurement points of the respective objects on which the scanning beam (126, 128) impinges from received signals of the light receiver (132) using a light time of flight method,
a panoramic camera (210) having panoramic optics (216) and an image sensor (218) with a plurality of light-receiving elements for the detection of image points as well as a control and evaluation unit (14, 140, 222) configured to merge the 3D measurement points of the laser scanner (110) and the image points of the panoramic camera (210),
wherein laser scanner (110) and panoramic camera (210) are arranged with a mutual distance (a),
and wherein the optical axis (220) of the panoramic camera and the rotation axis (118) coincide (12).

2. The sensor (10) according to claim 1,
wherein the panoramic camera (210) is configured as a time of flight camera.

3. The sensor (10) according to claim 1 or 2,
wherein the image sensor (218) is arranged on the axis of rotation (12, 118), in particular is oriented perpendicular to the axis of rotation (12, 118) and/or is centered around the axis of rotation (12, 118).

4. The sensor (10) according to any of the preceding claims,
wherein the control and evaluation unit (14, 140, 222) is configured to assign at least one angular position of the deflection unit (112) to light receiving elements on a radial line of the image sensor (218).

5. The sensor (10) according to any of the preceding claims,
wherein the control and evaluation unit (14, 140, 222) is configured to assign light receiving elements at a radial distance from the optical axis to a scanning beam (126, 128).

6. The sensor (10) according to any of the preceding claims,
wherein the laser scanner (110) and the panoramic camera (210) are arranged directly above one another on the axis of rotation (12, 118).

7. The sensor (10) according to any of the preceding claims,
wherein the control and evaluation unit (14, 140, 222) is configured to recognize a light spot generated by a scanning beam (126, 128) on the image sensor (128) and to assign 3D measurement points and image points to one another on the basis thereof.

8. The sensor (10) according to any of the preceding claims,
wherein the image sensor (218) is an event-based image sensor.

9. The sensor (10) according to claim 8,
wherein the light receiving elements are configured to detect when the intensity detected by the respective light receiving element changes and to provide image information event-based exactly in that case, wherein in particular a respective light receiving element provides as image information differential information whether the intensity has decreased or increased and/or provides an integrated intensity in a time window determined by a change of the intensity.

10. The sensor (10) according to any of the preceding claims,
wherein laser scanner (110) and/or panoramic camera (210) are configured as modules that can be removed from or added to the sensor (10), and wherein in particular the control and evaluation unit (14, 140, 222) is configured to calibrate laser scanner (110) and panoramic camera (210) with respect to each other when a module is retroactively added.

11. A method for detecting objects in a monitoring area (16, 120, 212), wherein the monitoring area (120)
on the one hand is scanned by a laser scanner (110) having a deflection unit (112) rotatable about an axis of rotation (118), a light transmitter (122) and a light receiver (132) using at least one scanning beam (126, 128), in order to determine 3D measurement points of the respective objects on which the scanning beam (126, 128) impinges from received signals of the light receiver (132) using a light time of flight method
and, on the other hand, is scanned by a panoramic camera (210) having panoramic optics (216) and an image sensor (218) with a plurality of light receiving elements in order to obtain image points, and wherein the 3D measurement points of the laser scanner (110) and the image points of the panoramic camera (210) are merged,
wherein laser scanner (110) and panoramic camera (210) are arranged with a mutual distance (a),
and wherein the optical axis (220) of the panoramic camera (210) and the rotation axis (118) coincide (12).

12. The method according to claim 11,
wherein the merging maps a scan angle of the scanning unit (112) to an azimuth angle on the image sensor (218) and an elevation angle of the scanning beam (126, 128) to a radial distance from the rotation axis (12, 118) on the image sensor (218).

## Revendications

1. Capteur optoélectronique (10) pour détecter des objets dans une zone à surveiller (16, 120, 212), le capteur (10) comprenant un scanner laser (110) ayant une unité de déviation (112) pouvant tourner autour d'un axe de rotation (118), un émetteur de lumière (122) et un récepteur de lumière (132) pour balayer la zone à surveiller (120) avec au moins un faisceau de balayage (126, 128), ainsi qu'une première unité de mesure de distance (140) réalisée pour déterminer, à partir des signaux de réception du récepteur de lumière (132), des points de mesure 3D des objets respectifs touchés par le faisceau de balayage (126, 128), selon le principe du temps de vol de lumière,
une caméra panoramique (210) ayant une optique panoramique (216) et un capteur d'image (218) présentant une pluralité d'éléments récepteurs de lumière pour détecter des points d'image,
ainsi qu'une unité de commande et d'évaluation (14, 140, 222) qui est réalisée pour fusionner les points de mesure 3D du scanner laser (110) et les points d'image de la caméra panoramique (210),
dans lequel le scanner laser (110) et la caméra panoramique (210) sont disposés à une distance (a) l'un de l'autre, et l'axe optique (220) de la caméra panoramique et l'axe de rotation (118) coïncident (12).

2. Capteur (10) selon la revendication 1,
dans lequel la caméra panoramique (210) est réalisée sous forme de caméra à temps de vol.

3. Capteur (10) selon la revendication 1 ou 2,
dans lequel le capteur d'image (218) est disposé sur l'axe de rotation (12, 118), en particulier orienté perpendiculairement à l'axe de rotation (12, 118) et/ou centré autour de l'axe de rotation (12, 118).

4. Capteur (10) selon l'une des revendications précédentes,
dans lequel l'unité de commande et d'évaluation (14, 140, 222) est réalisée pour associer au moins une position angulaire de l'unité de déviation (112) à des éléments récepteurs de lumière sur une ligne radiale du capteur d'image (218).

5. Capteur (10) selon l'une des revendications précédentes,
dans lequel l'unité de commande et d'évaluation (14, 140, 222) est réalisée pour associer des éléments récepteurs de lumière à un faisceau de balayage (126, 128) à une distance radiale de l'axe optique.

6. Capteur (10) selon l'une des revendications précédentes,
dans lequel le scanner laser (110) et la caméra panoramique (210) sont directement superposés sur l'axe de rotation (12, 118).

7. Capteur (10) selon l'une des revendications précédentes,
dans lequel l'unité de commande et d'évaluation (14, 140, 222) est réalisée pour reconnaître un spot lumineux généré par un faisceau de balayage (126, 128) sur le capteur d'image (128) et pour associer les uns aux autres des points de mesure 3D et des points d'image sur la base dudit spot.

8. Capteur (10) selon l'une des revendications précédentes,
dans lequel le capteur d'image (218) est un capteur d'image orienté événements.

9. Capteur (10) selon la revendication 8,
dans lequel les éléments récepteurs de lumière sont réalisés pour constater si l'intensité détectée par l'élément récepteur de lumière respectif change et pour fournir à ce moment précis une information d'image orientée événements, et en particulier, un élément récepteur de lumière respectif fournit comme information d'image une information différentielle indiquant si l'intensité a diminué ou augmenté, et/ou fournit une intensité intégrée dans une fenêtre temporelle déterminée par un changement d'intensité.

10. Capteur (10) selon l'une des revendications précédentes,
dans lequel le scanner laser (110) et/ou la caméra panoramique (210) sont réalisés sous forme de modules qui peuvent être retirés du capteur (10) ou être ajoutés au capteur (10), et en particulier, l'unité de commande et d'évaluation (14, 140, 222) est réalisée pour calibrer le scanner laser (110) et la caméra panoramique (210) l'un par rapport à l'autre lorsqu'un module est ajouté a posteriori.

11. Procédé de détection d'objets dans une zone à surveiller (16, 120, 212), dans lequel la zone à surveiller (120)
est d'une part balayée avec au moins un faisceau de balayage (126, 128) par un scanner laser (110) ayant une unité de déviation (112) pouvant tourner autour d'un axe de rotation (118), un émetteur de lumière (122) et un récepteur de lumière (132), afin de déterminer, à partir des signaux de réception du récepteur de lumière (132), des points de mesure 3D des objets respectifs touchés par le faisceau de balayage (126, 128), selon le principe du temps de vol de lumière, et
est d'autre part détectée par une caméra panoramique (210) ayant une optique panoramique (216) et un capteur d'image (218) présentant une pluralité d'éléments récepteurs de lumière pour obtenir des points d'image, et dans lequel
les points de mesure 3D du scanner laser (110) et les points d'image de la caméra panoramique (210) sont fusionnés,
le scanner laser (110) et la caméra panoramique (210) sont disposés à une distance (a) l'un de l'autre, et
l'axe optique (220) de la caméra panoramique (210) et l'axe de rotation (118) coïncident (12).

12. Procédé selon la revendication 11,
dans lequel le fusionnement permet d'associer un angle de balayage de l'unité de balayage (112) à un angle azimutal sur le capteur d'image (218), et d'associer un angle d'élévation du faisceau de balayage (126, 128) à une distance radiale par rapport à l'axe de rotation (12, 118) sur le capteur d'image (218).
